# EUROPÄISCHE PATENTSCHRIFT

(11) **EP 1 679 494 B1**
(45) Veröffentlichungstag und Bekanntmachung des Hinweises auf die Patenterteilung: **09.09.2015**
(21) Anmeldenummer: 05106981.3
(22) Anmeldetag: 28.07.2005
(51) Int. Cl.: G01F 11/10, G01F 11/02, B65B 1/38, C40B 60/02

(54) **Verfahren zur Dosierung von Pulvern und Vorrichtung zur Durchführung desselben**
Method for metering powders and device for its realisation
Procédé pour le dosage de poudres et dispositif pour la réalisation de celui-ci

(30) Priorität: 30.09.2004 DE 102004047464
(43) Veröffentlichungstag der Anmeldung: 12.07.2006
(73) Patentinhaber: ROBERT BOSCH GMBH, 70442 Stuttgart (DE)
(72) Erfinder: Brinz, Thomas, 73266 Bissingen A.D. Teck (DE); Lewis, Jane, 70186 Stuttgart (DE); Tiefenbacher, Markus, 70736 Fellbach-Schmiden (DE); Geiger, Thomas, 72141 Walddorfhaeslach (DE)

(56) Entgegenhaltungen:
- WO-A-03/098170
- DE-A1- 2 707 882
- US-A- 3 656 518
- US-A- 4 542 835
- US-A1- 2004 146 434

## Beschreibung

### Stand der Technik

Die Erfindung bezieht sich auf ein Verfahren zur Dosierung von Pulvern, insbesondere zur Erstellung kombinatorischer Materialbibliotheken, und eine Vorrichtung zur Durchführung desselben nach dem Oberbegriff der unabhängigen Ansprüche.

Die Auffindung und Entwicklung neuer Stoffe und Materialien stellt ein vorrangiges Ziel der Materialwissenschaften, der Chemie und Pharmazie dar. Die Suche nach geeigneten Verbindungen ist jedoch sehr oft mit einem großen fmanziellen und zeitlichen Aufwand verbunden. Um diese Suche effektiver und kostengünstiger durchführen zu können, wurde schon vor Jahren in der Pharmazie, dann auch in anderen Anwendungsgebieten eine systematische Methodik eingeführt, die unter der Bezeichnung "Kombinatorische Chemie" bekannt geworden ist. Dabei werden parallel mehrere potentiell interessante Verbindungen erzeugt und analysiert. Der Vorteil dieser Methode ist in der Möglichkeit zur Automatisierung zu sehen, die einen großen Durchsatz in kürzester Zeit gestattet.

Zur Erzeugung der dabei benötigten Materialbibliotheken war man lange Zeit auf die Verwendung löslicher Substanzen angewiesen, da zur Dosierung der Substanzen nur Systeme zur Verfügung standen, die lediglich die Dosierung von Flüssigkeit zuließen. Insbesondere in der Materialwissenschaft liegt ein Schwerpunkt auf der genauen Dosierung weitgehend schwerlöslicher Substanzen bspw. in Pulver- oder Pastenform. Weiterhin spielt zunehmend die exakte Dosierung kleinster Substanzmengen eine große Rolle. Es ist bekannt, die Dosierung pulverförmiger Substanzen vorzunehmen, indem zunächst aus dem Pulver durch Verpressen ein Pellet erzeugt wird, dieses nachfolgend mit einem geeigneten Hohlstempel durchstoßen wird und das ausgestanzte Pelletmaterial in ein Gefäß zur weiteren Verwendung transferiert wird. Nachteilig an diesem Verfahren ist dessen Beschränkung auf Pulver, die auf einfache Weise zu einem Pellet geformt werden können.

Pulverdosiervorrichtungen gemäß dem Oberbegriff von Anspruch 1 sind aus den Dokumenten US2004/146434, US-A-3656518, DE2707882, US-A-4542835, WO03/098170 bekannt.

Aufgabe der vorliegenden Erfindung ist es, eine Pulverdosiervorrichtung bzw. ein Verfahren zum Betrieb derselben bereitzustellen, die die automatisierte Dosierung von Pulvern in einfacher und somit kostengünstiger Weise gestatten.

### Vorteile der Erfindung

Die der Erfindung zugrundeliegende Aufgabe wird in vorteilhafter Weise durch eine Pulverdosiervorrichtung mit den kennzeichnenden Merkmalen des unabhängigen Anspruchs gelöst.

Die erfindungsgemäße Pulverdosiervorrichtung bzw. das Verfahren zum Betrieb derselben haben den Vorteil, dass eine automatisierte Dosierung von Pulvern insbesondere zur Erstellung kombinatorischer Materialbibliotheken auf einfache und dennoch zuverlässige Weise erfolgen kann. Dabei wird ein Dosierelement verwendet, das ein einseitig geöffnetes Vorratsgefäß zur Aufnahme der zu dosierenden Substanzen aufweist sowie einen Stempel, der das rohrförmige Vorratsgefäß an dessen der Öffnung abgewandtem Ende reversibel verschließt, wobei das Vorratsgefäß zur Aufnahme des Pulvers mit seiner Öffnung voran in eine in einer Dosiervorlage vorgelegte Schüttung des zu dosierenden Pulvers getaucht wird, derart, dass die die Öffnung des Vorratsgefäßes begrenzenden Ränder eine Bodenfläche der Dosiervorlage berühren. Auf diese Weise ist gewährleistet, dass eine defmierte Menge des vorgelegten Pulvers in das Vorratsgefäß des Dosierelements aufgenommen wird.

Durch die in den Unteransprüchen aufgeführten Maßnahmen sind vorteilhafte Weiterbildungen und Verbesserungen der im unabhängigen Anspruch angegebenen Pulverdosiervorrichtung möglich.

So ist von Vorteil, wenn das Eintauchen des Dosierelements in die vorgelegte Schüttung mindestens zweimal, vorzugsweise mehrfach in direkter Abfolge nacheinander erfolgt, da dabei einen Verfestigung des Pulvers im Vorratsgefäß eintritt. Auf diese Weise entsteht innerhalb des Vorratsgefäßes eine verfestigte und somit definierte Menge des zu dosierenden Pulvers. Der Ausstoß des in das Vorratsgefäß aufgenommenen Pulvers erfolgt vorteilhafterweise durch eine axiale Bewegung des Stempels. Dabei erfolgt der Ausstoß bevorzugt in ein Dosiergefäß, das zur Kontrolle der dosierten Pulvermenge auf einer Waage positioniert ist.

In einer weiteren vorteilhaften Ausführungsform erfolgt nach Ausstoß des Pulvers ein Abstreifen des Dosierelements, wobei dabei vorteilhafterweise ein Durchstoßen eines elastischen, eingekerbten und flächigen Abstreifelementes erfolgt. Gemäß der vorliegenden Erfindung weisen das Vorratsgefäß und/oder der Stempel eine Aufnahme als Angriffspunkt für eine mechanische Greifvorrichtung auf. Dies erlaubt die vollautomatische Aufnahme und Bedienung des Dosierelements beispielsweise durch Dosierroboter. Darüber hinaus weist die Aufnahme eine Kodierung zur Erkennung des Volumens oder des Durchmessers des zugehörigen Vorratsgefäßes auf.

In einer weiteren besonders vorteilhaften Ausführungsform umfasst die Dosiervorlage eine Vibriervorrichtung. Diese bewirkt eine gleichmäßige Schichtdicke der vorgelegten Pulverschüttung auch bei fortschreitender Entnahme. Alternativ oder zusätzlich weist die Dosiervorlage in Richtung ihrer die Schüttung tragenden Bodenfläche abgeschrägte Seitenbegrenzungsflächen auf.

### Zeichnung

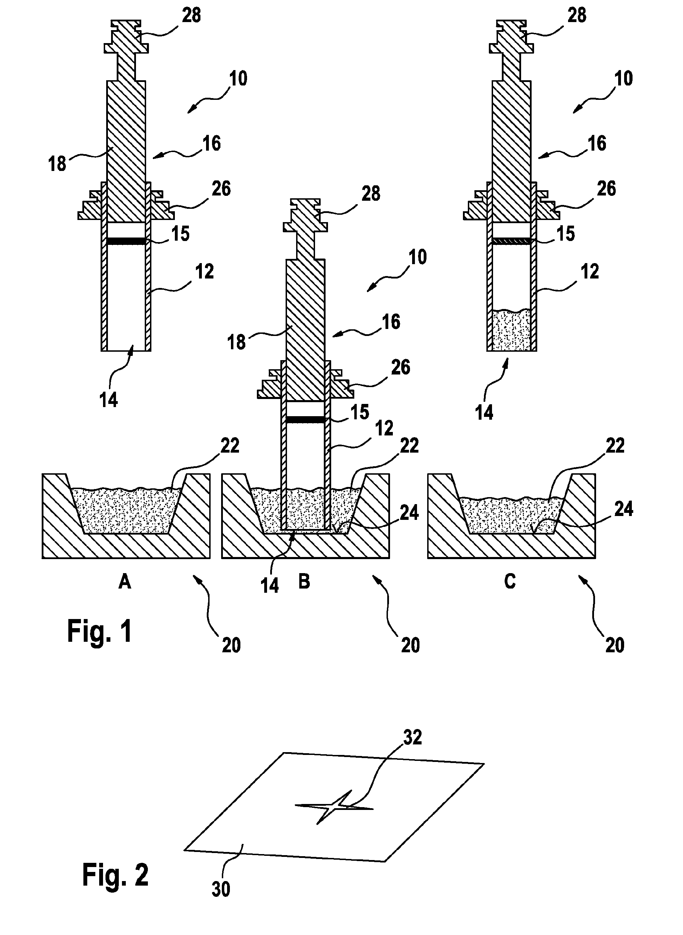

Ein Ausführungsbeispiel der Erfindung ist in der Zeichnung dargestellt und in der nachfolgenden Beschreibung näher erläutert. Figur 1 zeigt schematisch ein Ablaufschema des erfindungsgemäßen Verfahrens mit den Schritten A, B, und C sowie eine Schnittdarstellung einer Pulverdosiervorrichtung und Figur 2 eine Aufsicht auf eine Abstreifvorrichtung.

### Ausführungsbeispiel

Die in Figur 1 dargestellte Pulverdosiervorrichtung umfasst ein Dosierelement 10 sowie eine Dosiervorlage 20. Das Dosierelement 10 beinhaltet ein Vorratsgefäß 12 zur Aufnahme eines zu dosierenden Pulvers. Das Vorratsgefäß 12 ist aus einem im wesentlichen chemisch inerten Material, wie beispielsweise Glas, PTFE oder PVC ausgeführt und vorzugsweise zylindrisch gestaltet. Alternativ kann das Vorratsgefäß 12 einen runden, quadratischen, rechteckigen Querschnitt aufweisen oder geometrisch anders gestaltete Querschnitte annehmen. Das Vorratsgefäß 12 ist vorzugsweise einseitig geöffnet ausgeführt, wobei dessen der Öffnung 14 gegenüberliegendes Ende mittels eines axial beweglichen Stempels 16 verschlossen ist. Der Stempel 16 ist vorzugsweise axial stufenlos verschiebbar ausgeführt; da auf diese Weise die in das Vorratsgefäß aufnehmbare Pulvermenge beschränkt werden kann. Die stufenlose Verstellbarkeit des Stempels 16 erhöht die Dosiergenauigkeit des Dosierelementes 10.

Um die Verschließbarkeit des Vorratsgefäßes 12 unabhängig vom Stempel 16 zu gewährleisten, weist das Vorratsgefäß 12 vorzugsweise im Bereich seiner Öffnung ein auf die Außenwandung des Vorratsgefäßes 12 aufgeprägtes, nicht dargestelltes Gewinde auf.

Der Stempel 16 umfasst vorzugsweise an seiner der zu dosierenden Substanz zugewandten Seite eine Dichtung 15 auf, die beispielsweise mechanisch fixiert und somit austauschbar ausgeführt ist. Auf seiner der zu dosierenden Substanz abgewandten Seite geht der Stempel 14 in einem Kolbenschaft 18 über, der zur besseren Führung vorzugsweise vier geeignete Rippen aufweist. Der Stempel 16 sowie der Kolbenschaft 18 besteht vorzugsweise aus Edelstahl oder einem chemisch inerten Polymer wie PTFE oder PVC.

Um eine automatisierte Dosierung im kurzen Zeittakt zu gewährleisten, weist das Vorratsgefäß 12 auf seiner der Öffnung abgewandten Seite und/oder der Stempel 16 bzw. Kolbenschaft 18 auf seiner der zu dosierenden Substanz abgewandten Seite eine Aufnahme oder Passung 26, 28 auf, die als Angriffspunkt für eine nicht dargestellte mechanische Greifvorrichtung dient.

Die in Figur 1 dargestellte Pulverdosiervorrichtung weist weiterhin eine Dosiervorlage 20 auf, die beispielsweise in Form eines oben geöffneten Behälters ausgeführt ist, in den das Pulver als lose Schüttung 22 eingebracht ist. Alternativ ist die Dosiervorlage als Lochscheibe mit vorzugsweise mehreren Durchbrüchen ausgestaltet, wobei an der Unterseite der Lochscheibe eine bewegliche Bodenplatte vorgesehen ist, durch die einzelne bzw. alle Durchbrüche bodenseitig verschlossen werden können. Dies ermöglicht die Vorlage mehrerer verschiedener Pulver in einer Dosiervorlage, sowie deren Entfernung aus den Durchbrüchen nach erfolgter Aufnahme durch das Dosierelement 10 bspw. durch Drehen oder sonstiges Wegbewegen der Bodenplatte.

Die in Figur 1 dargestellte Pulverdosiervorrichtung dient insbesondere der Dosierung von pulverförmigen Ausgangsverbindungen zur Erstellung kombinatorischer Materialbibliotheken. Dabei werden unter einem Pulver Substanzen verstanden, die in fester, weitgehend trockener und schüttfähiger Form vorliegen. Das Pulver kann dabei einen in weiten Grenzen beliebigen Teilchendurchmesser aufweisen, es können beispielsweise auch Nanoteilchen dosiert werden. Das Pulver kann aus einer einheitlichen Substanz gebildet seien oder Substanzmischungen enthalten.

Zur Dosierung des Pulvers wird in einem Verfahrensschritt A das Dosierelement 10 im wesentlichen über der Öffnung der Dosiervorlage 20 positioniert, wobei die Öffnung 14 des Dosierelements 10 der Schüttung 22 zugewandt weitgehend senkrecht über der Dosiervorlage 20 lokalisiert ist. In einem Schritt B wird dann das Dosierelement 10 mit einer vorgegebenen Kraft so durch die Öffnung der Dosiervorlage 20 hindurch in axialer Richtung geführt, dass die Öffnung 14 des Dosierelements 10 in die Schüttung 22 eintaucht, bis der durch die Schüttung 22 resultierende mechanische Widerstand die Axialbewegung zum stillstand bringt. Die Eintauchtiefe wird somit über die Höhe der vorgegebenen Kraft gesteuert. Eine weitere Möglichkeit besteht darin, die vorgegebene Kraft verhältnismäßig groß zu wählen und das Dosierelement 10 so durch die Öffnung der Dosiervorlage 20 hindurch in axialer Richtung zu führen, bis die Öffnung 14 mit einer die Schüttung 22 tragenden Bodenfläche 24 der Dosiervorlage 20 in Kontakt kommt.

Dabei wird zu dosierendes Pulver der Schüttung 22 in das Innere des Vorratsgefäßes 12 eingepresst. Daraufhin wird das Dosierelements 10 in axialer Richtung nach oben bewegt; vorzugsweise bis das Vorratsgefäß 12 nicht mehr in Kontakt mit der Schüttung 22 steht (Schritt C).

Dieser Vorgang wird vorzugsweise mehrfach wiederholt, bis das Innere des Vorratsgefäßes 12 zumindest weitgehend mit dem zu dosierenden Pulver gefüllt ist und das sich darin befmdende Pulver stark verdichtet ist. In einem letzten Schritt wird das Dosierelement 10 beispielsweise über einer Materialaufnahme eines kombinatorischen Substrats in Position gebracht und das dosierte Pulver durch axiale Bewegung des Stempels 16 ausgestoßen. Dabei kann die Materialaufnahme beispielsweise eine Wägevorrichtung zur Kontrolle der dosierten Pulvermenge aufweisen.

Um ein Nachrutschen des Pulvers nach Entnahme und somit eine Neubildung einer gleichmäßigen Schüttung 22 zu bewirken, weist die Dosiervorlage 20 vorzugsweise abgeschrägte Seitenwände auf, sodass sich der Querschnitt der Dosiervorlage 20 von dessen Öffnung her in Richtung Bodenfläche 24 vorzugsweise stetig verjüngt. Alternativ oder zusätzlich ist es möglich, die Dosiervorlage 20 mit einer Vibrationsvorrichtung zu koppeln.

Bei der Dosierung verschiedener Pulver kann es zu einer Kontamination der Pulver bei Verwendung ein und desselben Dosierelements 10 kommen. Zur Vermeidung einer Kontamination oder einer Verschleppung von an der Außenfläche des Vorratsgefäßes 12 haftenden Pulvers kann weiterhin ein Abstreifvorrichtung 30 vorgesehen sein, wie sie beispielsweise in Figur 2 dargestellt ist. Zur Reinigung des Dosierelements 10 wird dieses durch einen vorzugsweise kreuzförmigen Schlitz 32 der Abstreifvorrichtung 30 axiale geführt, sodass am Vorratsgefäß 12 haftendes Pulver abgestreift wird. Die Abstreifvorrichtung ist vorzugsweise flächig aus einem elastischen Material ausgeführt.

Eine Alternative besteht darin, zur Dosierung verschiedener Pulver jedem der zu dosierenden Pulver bzw. Pulvermischungen ein separates Dosierelement 10 zuzuordnen. Dies vermeidet effektiv eine Vermischung bzw. Kontamination der Pulver untereinander. Sollte es sich bei dem vorgelegten Pulver um eine luftempfmdliche Verbindung handeln, kann die beschriebene Dosierung in einer Schutzgasapparatur, beispielsweise in einer Glove Box, erfolgen.

Die Pulverdosiervorrichtung umfasst somit mindestens ein Dosierelement 10, mindestens eine Dosiervorlage, sowie gegebenenfalls eine Greifvorrichtung, eine Steuereinheit zur Steuerung der Greifvorrichtung bzw. eine Abstreifvorrichtung.

Es ist möglich, mehrere Dosierelemente 10 vorzusehen, die sich insbesondere hinsichtlich des möglichen Dosiervolumens unterscheiden. Trotz unterschiedlichem Volumen der Vorratsgefäße 12 wird die Längsausdehnung der Dosierelemente 10 weitgehend konstant gehalten. Verschiedene Volumina werden durch die Wahl entsprechender Durchmesser des Vorratsgefäßes 12 bzw. durch unterschiedliche Ausgangspositionen des Stempels 16 innerhalb des Vorratsgefäßes 12 realisiert. Dies ermöglicht, dass Dosierelemente 10 unterschiedlicher Dosiervolumina nacheinander zur Dosierung herangezogen werden können, ohne dass es einer Adaptierung der mechanischen Greifvorrichtung bedarf. Darüber hinaus besteht die Möglichkeit, die Aufnahmen 26, 28 so zu gestalten, dass sie eine Kennung zur Identifikation des Dosiervolumens aufweisen, sodass die mechanische Greifvorrichtung automatisch an das entsprechende Dosiervolumen des gerade gehalterten Dosierelements adaptiert wird.

## Patentansprüche

1. Pulverdosiervorrichtung mit einem Dosierelement (10), das ein einseitig geöffnetes, rohrförmiges Vorratsgefäß (12) zur Aufnahme der zu dosierenden Substanz, und einen Stempel (16) aufweist, der axial beweglich ist und das rohrförmige Vorratsgefäß (12) an dessen der Öffnung (14) abgewandtem Ende reversibel verschließt, und mit einer Dosiervorlage (20), die ein zu dosierendes Pulver als Schüttung (22) enthält, wobei das Dosierelement 10 mit der Öffnung (14) des Vorratsgefäßes (12) voraus in die in der Dosiervorlage (20) vorgelegte Schüttung (22) eintauchbar ausgeführt ist, **dadurch gekennzeichnet, dass** das Vorratsgefäß und/oder der Stempel (16) eine Aufnahme (26, 28) als Angriffspunkt für eine mechanische Greifvorrichtung umfasst, und dass die Aufnahme (26, 28) eine Codierung zur Erkennung des Volumens oder des Durchmessers des zugehörigen Vorratsgefäßes (12) aufweist.

2. Pulverdosiervorrichtung nach Anspruch 1, **dadurch gekennzeichnet, dass** mehrere Dosierelemente (10) vorgesehen sind, deren Vorratsgefäße (12) eine im wesentlichen identische Längsausdehnung und unterschiedliche Durchmesser aufweisen.

3. Pulverdosiervorrichtung nach einem der Ansprüche 1 oder 2, **dadurch gekennzeichnet, dass** die Dosiervorlage (20) eine Vibriervorrichtung umfasst.

4. Pulverdosiervorrichtung nach einem der Ansprüche 1 bis 3, **dadurch gekennzeichnet, dass** die Dosiervorlage (20) in Richtung ihrer die Schüttung (22) tragenden Bodenfläche (24) abgeschrägte Seitenbegrenzungsflächen aufweist.

5. Pulverdosiervorrichtung nach einem der Ansprüche 1 bis 4, **dadurch gekennzeichnet, dass** die Dosiervorlage (20) als Lochscheibe mit mehreren Durchbrüchen ausgeführt ist, wobei an der Unterseite der Lochscheibe eine beweglich ausgeführte Bodenplatte vorgesehen ist, durch die die Durchbrüche verschließbar sind.

## Claims

1. Powder-dosing device with a dosing element (10) having a tubular storage vessel (12), which is open at one end and is intended for accommodating the substance which is to be dosed, and having a plunger (16), which can be moved axially and closes the tubular storage vessel (12) in a reversible manner at its end which is directed away from the opening (14), and with a dosing reservoir (20), which contains a powder for metering in the form of a loose fill (22), wherein the metering element (10) is configured such that it can be immersed, with the opening (14) of the storage vessel (12) in front, into the loose fill (22) presented in the dosing reservoir (20), **characterized in that** the storage vessel and/or the plunger (16) comprise/comprises a mount (26, 28) as a point of engagement for a mechanical gripping device, and **in that** the mount (26, 28) has a coding for identifying the volume or the diameter of the associated storage vessel (12).

2. Powder-dosing device according to Claim 1, **characterized by** the provision of a plurality of dosing elements (10), of which the storage vessels (12) have essentially identical longitudinal extents and different diameters.

3. Powder-dosing device according to either of Claims 1 and 2, **characterized in that** the dosing reservoir (20) comprises a vibrating device.

4. Powder-dosing device according to one of Claims 1 to 3, **characterized in that** the dosing reservoir (20) has side boundary surfaces which are bevelled in the direction of the reservoir base surface (24), which carries the loose fill (22).

5. Powder-dosing device according to one of Claims 1 to 4, **characterized in that** the dosing reservoir (20) is configured in the form of a perforated disc with a plurality of through-passages, wherein a movable base plate is provided on the underside of the perforated disc and can close the through-passages.

## Revendications

1. Dispositif pour le dosage de poudre comprenant un élément de dosage (10) qui présente un réservoir tubulaire ouvert d'un côté (12) pour recevoir la substance à doser et un poinçon (16) qui est déplaçable axialement et qui ferme de manière réversible le réservoir tubulaire (12) au niveau de son extrémité opposée à l'ouverture (14), et comprenant une réserve de dosage (20) qui contient une poudre à doser en tant que matière en vrac (22), l'élément de dosage (10) étant réalisé avec l'ouverture (14) du réservoir (12) de manière à pouvoir être plongé préalablement dans la matière en vrac (22) préalablement introduite dans la réserve de dosage (20), **caractérisé en ce que** le réservoir et/ou le poinçon (16) comprennent un logement (26, 28) en tant que point d'engagement pour un dispositif de préhension mécanique, et **en ce que** le logement (26, 28) présente un codage pour reconnaître le volume ou le diamètre du réservoir associé (12).

2. Dispositif pour le dosage de poudre selon la revendication 1, **caractérisé en ce que** plusieurs éléments de dosage (10) sont prévus, dont les réservoirs (12) présentent une étendue longitudinale essentiellement identique et des diamètres différents.

3. Dispositif pour le dosage de poudre selon l'une quelconque des revendications 1 ou 2, **caractérisé en ce que** la réserve de dosage (20) comprend un dispositif vibreur.

4. Dispositif pour le dosage de poudre selon l'une quelconque des revendications 1 à 3, **caractérisé en ce que** la réserve de dosage (20) présente dans la direction de sa surface de fond (24) portant la matière en vrac (22) des surfaces de limitation latérales biseautées.

5. Dispositif pour le dosage de poudre selon l'une quelconque des revendications 1 à 4, **caractérisé en ce que** la réserve de dosage (20) est réalisée sous forme de disque perforé avec plusieurs orifices, une plaque de fond réalisée de manière mobile étant prévue au niveau du côté inférieur du disque perforé, laquelle permet de fermer les orifices.
